# EUROPEAN PATENT APPLICATION

(11) **EP 4 410 583 A1**
(43) Date of publication of application: **07.08.2024**
(21) Application number: 24154339.6
(22) Date of filing: 29.01.2024
(51) Int. Cl.: B60K 35/00, B60K 35/10, B60K 35/22, B60K 35/50, B60K 35/53, B60K 37/00, G06F 1/16, B60R 13/02, B60R 13/04

(54) **TRIM COVER**

(30) Priority: 06.02.2023 US 202363483520 P
(71) Applicant: Apple Inc., Cupertino, CA 95014 (US)
(72) Inventor: MAYR, Johannes, Cupertino, CA, 95014 (US); HERZBERG, Brandon, Cupertino, CA, 95014 (US); JUE, Derrick T., Cupertino, CA, 95014 (US); GRIFFIN, James G., Cupertino, CA, 95014 (US); STORM, Trent, Cupertino, CA, 95014 (US)
(74) Representative: Lang, Johannes

(57) **Abstract**

A trim assembly has a trim portion that includes a first trim panel and a second trim panel that are separated by a gap. A shell is configured to couple with the trim portion, and an outer surface of the shell is continuous from an outer edge of the first trim panel to an outer edge of the second trim panel and extends across the gap.

## Description

### CROSS-REFERENCE TO RELATED APPLICATIONS

This application claims the benefit of United States Provisional Application No. 63/483,520, filed on February 6, 2023, the contents of which are hereby incorporated by reference in their entirety for all purposes.

### FIELD

The present disclosure relates generally to the field of covering one or more structural portions.

### BACKGROUND

Structural portions of an object may be covered by, for example, one or more trim portions to prevent the structural portions from being viewed by an observer.

### SUMMARY

One aspect of the disclosure is a trim assembly for a vehicle with a trim portion that includes a first trim panel and a second trim panel that are separated by a gap. A shell is configured to couple with the trim portion, and an outer surface of the shell is continuous from an outer edge of the first trim panel to an outer edge of the second trim panel and extends across the gap.

Another aspect of the disclosure is a trim assembly for a vehicle with a trim portion that includes a first trim panel and a second trim panel. A shell is configured to couple with the trim portion. A connector portion is configured to connect to the first trim panel and the second trim panel, and the connector portion includes a mating portion configured to interface with a corresponding mating portion of the first trim panel and the second trim panel to align the first trim panel and the second trim panel. The shell is configured to extend across gaps between the first trim panel, the second trim panel, and the connector portion such that the gaps are obscured from view from within a cabin of the vehicle.

Yet another aspect of the disclosure is a vehicle that includes a body portion. A trim portion is connected to the body portion and includes a first trim panel and a second trim panel that are separated by a gap. A shell is configured to couple with the trim portion, and an outer surface of the shell is continuous from an outer edge of the first trim panel to an outer edge of the second trim panel and extends across the gap such that the gap is obscured from view from within a cabin of the vehicle. A skin is configured to extend over the outer surface of the shell, and the shell has a weakened portion that separates a first shell portion from a second shell portion and is configured to allow the shell to deform in response to a force.

### BRIEF DESCRIPTION OF THE DRAWINGS

FIG. 1 is an illustration of a trim assembly.
FIG. 2A is an illustration of a cross-section of the trim assembly of FIG. 1 across line A-A.
FIG. 2B is an illustration of a skin in an unstretched configuration and a stretched configuration.
FIG. 3 is an illustration of a cross-section of the trim assembly of FIG. 2 across line B-B.
FIG. 4 is an illustration of a shell of FIG. 1.
FIG. 5 is an illustration of a trim assembly.
FIG. 6 is an illustration of a trim assembly.

### DETAILED DESCRIPTION

The disclosure herein relates to a trim assembly configured to obscure the gaps and seams between trim carriers such that a trim portion of the vehicle appears seamless to an occupant within the cabin. In some implementations, the trim assembly includes a shell configured to extend across the gaps between the various trim carriers and cover the gaps and seams. The shell may be at least partially flexible to facilitate assembly of the shell to the trim carriers. In some implementations, the shell may also include rigid portions.

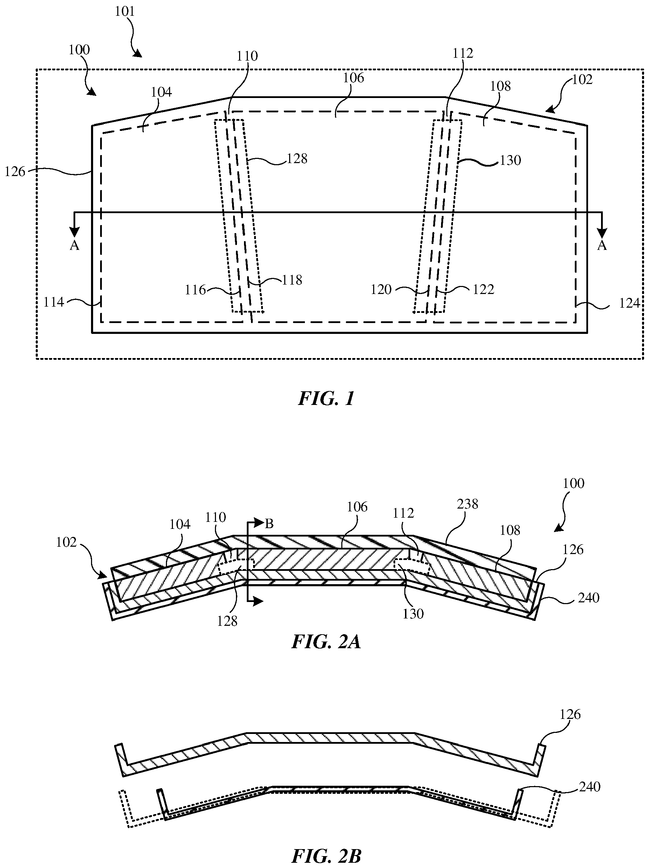

FIG. 1 is an illustration of a trim assembly 100. The trim assembly 100 may be implemented, for example, in a vehicle 101. The vehicle 101 may include gas or diesel-powered vehicles, electric vehicles, boat or marine vehicles, aircraft (e.g., airplanes, helicopters, etc.), remote-controlled vehicles, etc. The vehicle 101 may be configured using wheels, tracks, treads, fans, propellers, etc. The trim assembly 100 is shown to include a trim portion 102. The trim portion 102 includes a first trim panel 104, a second trim panel 106, and a third trim panel 108. In some implementations, the trim panels 104-108 are configured to cover one or more structural portions of the vehicle 101 that are formed from metal or other high strength, high stiffness materials. For example, the trim panels 104-108 may be configured to cover one or more support pillars, a ceiling panel, or another structural portion. Additionally, the trim panels 104-108 may be configured to cover non-structural portions of the vehicle 101 (e.g., a dashboard, console, door panel, etc.). More specifically, each of the trim panels 104-108 may be a thin walled structure having a size and shape that corresponds to the portion of the vehicle 101 being covered. The trim panels 104-108 may be positioned adjacent to the corresponding portion of the vehicle 101 being covered and extend around the corresponding portion. The portion of the vehicle 101 being covered (e.g., the structural or non-structural portion) may have a concave, convex, or multi-sided geometric configuration. As shown, the trim panels 104-108 may have any shape that corresponds to the shape of the portion of the vehicle 101 being covered. The trim panels 104-108 may be formed from materials such as plastics (e.g., polycarbonate, polyurethane, polypropylene, etc.) and/or metals (e.g., aluminum, magnesium, etc.) that are flexible relative to the structural or non-structural portion being covered. The trim panels 104-108 may also be formed from a material such as plastic that is covered with a compliant material (e.g., rubber, foam, polyester, thermoplastic polyurethane, a thermoplastic elastomer, a high density fabric, etc.), where the compliant material is flexible relative to the trim panels 104-108.

Each of the trim panels 104-108 includes edges. For example, the first trim panel 104 includes an edge 114 and an edge 116. The second trim panel 106 includes an edge 118 and an edge 120, and the third trim panel 108 includes an edge 122 and an edge 124. Depending on the orientation and arrangement of the trim panels 104-108, the edges 114-124 may be referred to as inner edges or outer edges. For example, inner edges are edges of adjacent trim panels that face one another. In the example embodiment shown in FIG. 1, the edge 116 and the edge 118 are inner edges because the first trim panel 104 is adjacent to the second trim panel 106. In addition, the edge 120 and the edge 122 are inner edges because the second trim panel 106 is adjacent to the third trim panel 108. Outer edges are edges of the trim panels 104-108 that are located opposite respective inner edges and define an outermost edge of the trim portion 102. In the example implementation of FIG. 1, the edge 114 is an outer edge because the edge 114 is located opposite the edge 116 and is an outermost edge of the trim portion 102. The edge 124 is an outer edge because the edge 124 is located opposite the edge 122 and is an outermost edge of the trim portion 102.

The first trim panel 104 and the second trim panel 106 are separated by a gap 110 that is defined by the edge 116 and the edge 118. The second trim panel 106 and the third trim panel 108 are separated by a gap 112 that is defined by the edge 120 and the edge 122. The gap 110 and the gap 112 may be present based on an arrangement of the structural and/or non-structural panels covered by the trim panels 104-108. For example, the first trim panel 104 may cover a pillar of the vehicle 101, and the second trim panel 106 may cover a ceiling panel of the vehicle 101. The first trim panel 104 and the second trim panel106 may be applied separately to the pillar and ceiling panel, respectively, and a difference in tolerances may be present between the first trim panel 104 and the second trim panel106. The difference in tolerances may result in the first trim panel 104 and the second trim panel106 being out of perfect alignment, thereby creating the gap 110. The gap 112 may be present for similar reasons. Accordingly, the gap 110 and the gap 112 facilitate connection of the trim panels 104-108 to the portions of the vehicle 101 being covered by allowing for a small amount of misalignment between the trim panels 104-108. Accordingly, the gap 110 and the gap 112 may arise from a separation or offset between components of the vehicle 101 (e.g., a part separation).

A shell 126 is configured to couple with the trim panels 104-108 to limit a view of the gap 110 and the gap 112 from a cabin of the vehicle 101. The shell 126 may couple with the trim panels 104-108 via a mechanical connection. For example, the shell 126 may include a flange or an extension that extends around the trim panels 104-108 to hold the shell 126 in place. As another example, the shell 126 may include a mating feature, and the trim panels 104-108 may include a corresponding mating feature that interfaces with the mating feature to secure the shell 126 to the trim panels 104-108. More specifically, the shell 126 may include a protrusion (e.g., a plug portion of a snap, a resilient portion of a finger that can compress and expand, etc.) and the trim panels 104-108 may include a recess (e.g., a receptacle portion of the snap, an aperture sized to compress the resilient portion of the finger as it passes through the aperture, etc.) configured to interface with the protrusion. As another example, the shell 126 may include one portion of a hook-and-loop connector (e.g., the hooks) and the trim panels 104-108 may include the mating portion of the hook-and-loop connector (e.g., the loops). Additionally, the shell 126 may include hooks similar to a hook-and-loop connector and the trim panels 104-108 may include a mesh configured to interface with the hooks. As an additional example, the shell 126 may include a single or double hook portion and the trim panels 104-108 may include corresponding hook receiving portions. Each of the configurations described above may be reversed such that components described with reference to the shell 126 may be implemented with the trim panels 104-108, and vice versa. Furthermore, any of the mating features described above may be combined such that the shell 126 may include multiple different mating features and the trim panels 104-108 may include corresponding mating features.

As shown, an outer surface of the shell 126 is continuous from the edge 114 (e.g., an outer edge of the first trim panel 104) to the edge 124 (e.g., an outer edge of the third trim panel 108) and extends across the gap 110 and the gap 112. More specifically, the shell 126 is configured to extend across the gap 110 and the gap 112 between the first trim panel 104, the second trim panel 106, and the third trim panel 108 such that the gap 110 and the gap 112 are obscured from view from within a cabin of the vehicle 101. For example, the shell 126 has a size that is larger than the combination of the trim panels 104-108 such that the shell 126 covers the gaps 110-112. In some implementations, the size of the shell 126 is based on a percentage of the size of the trim portion 102. For example, the size of the shell 126 may be approximately ten percent (e.g., between one and twenty percent, inclusive) larger than the size of the trim portion 102 (e.g., each dimension of the shell 126 may be five percent larger than the size of the trim portion 102). In some implementations, the size of the shell 126 is larger than the trim portion 102 by a specified amount. For example, each dimension of the shell 126 may be larger than the corresponding dimension of the trim panels 104-108 by approximately six millimeters (e.g., between two and ten millimeters, inclusive).

Though described above and below as being coupled with the trim portion 102, in some implementations the shell 126 may be coupled directly with the structural and non-structural portions of the vehicle 101 without the trim panels 104-108. Returning to the example above, the shell 126 may be configured to couple directly to the ceiling panel and the pillar without requiring the trim panels 104-108. In such implementations, the structural and non-structural portions to which the shell 126 is coupled may include the mating features previously described to facilitate coupling with the shell 126.

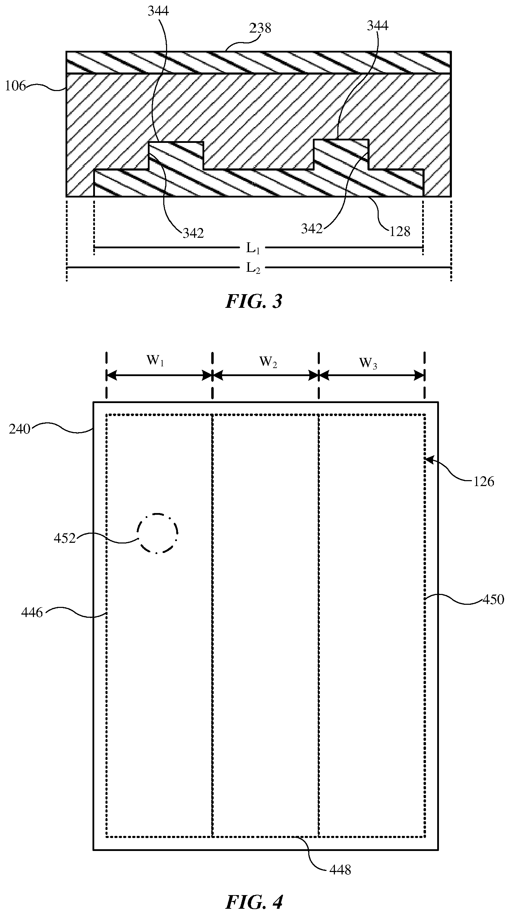

The shell 126 may include a polyester material that can be formed into a desired shape via heat and/or compression. For example, the shell 126 may be heated above a threshold temperature and placed into a mold to form the shell 126 into a desired shape. The mold may compress the shell 126 at different pressures to impart desired characteristics to the shell 126. For example, compressing the shell 126 at a low pressure allows the shell 126 to be more flexible and to absorb more sound than compressing the shell 126 at a high pressure. In contrast, compressing the shell 126 at a high pressure allows the shell 126 to be stiffer than compressing the shell 126 at a low pressure. In some implementations, the shell 126 may be compressed uniformly to impart uniform material properties across the shell 126. The shell 126 may also be compressed non-uniformly to impart different material properties across the shell 126. Such implementations are further described with reference to FIG. 4.

In some implementations, a connector portion 128 is configured to connect the first trim panel 104 and the second trim panel 106, and a connector portion 130 is configured to connect the second trim panel 106 and the third trim panel 108. In such implementations, the connector portion 128 and the connector portion 130 extend across the gap 110 and the gap 112, respectively. Examples of how the connector portions 128-130 connect the trim panels 104-108 are provided with reference to FIG. 3. The connector portion 128 and the connector portion 130 may be implemented in instances where, for example, weight reduction of the trim panels 104-108 is desirable (e.g., the connector portion 128 and the connector portion 130 include materials that are lighter than the material of the trim panels 104-108). Additionally, the connector portions 128-130 may be implemented to cover one or more edges (e.g., the edge 116, the edge 118, etc.) of the trim panels 104-108. The connector portions 128-130 may include materials such as a thermoplastic elastomer, rubber, polyurethane, or any other flexible material. Flexibility between the trim panels 104-108 (e.g., the ability of each of the trim panels 104-108 to move relative to each other) provided by the connector portions 128-130 may be desirable when positioning and installing the trim portion 102 in the vehicle 101. More specifically, the trim portion 102 may be installed after the various structural and non-structural panels are assembled. Flexibility between the trim panels 104-108 (provided by the connector portions 128-130) allows for the trim portion 102 to be maneuvered and manipulated around the structural and non-structural portions in manners that would not be possible without the flexibility provided by the connector portions 128-130.

In some implementations, the connector portions 128-130 may have a coefficient of thermal expansion that is lower than a coefficient of thermal expansion of the trim panels 104-108. For example, in a hot condition the connector portions 128-130 may expand at a slower rate than the trim panels 104-108, thereby limiting compression of the connector portions 128-130. Additionally, in a cold condition the connector portions 128-130 will contract at a slower rate than the trim panels 104-108, thereby limiting a size of gaps between the connector portions 128-130 and the trim panels 104-108 that may develop as the trim panels 104-108 contract. Limiting the size of the gaps between the connector portions 128-130 and the trim panels 104-108 allows the shell 126 to perform the same function of covering the gaps between the connector portions 128-130 and the trim panels 104-108 as covering the gaps 110-112.

Though the connector portions 128-130 extend across and may cover the gaps 110-112, additional gaps between the connector portions 128-130 and the trim panels 104-108 may be present and/or develop (e.g., based on thermal expansion and/or compression of the connector portions 128-130 and the trim panels 104-108). Accordingly, the shell 126 is also configured to extend across the additional gaps between the connector portions 128-130 and the trim panels 104-108.

FIG. 2A is an illustration of a cross-section of the trim assembly 100 of FIG. 1 across line A-A. FIG. 2B is an illustration of a skin 240 of the trim assembly 100 in an unstretched configuration and a stretched configuration. As shown in FIG. 2A, the trim portion 102 (e.g., the trim panels 104-108) is connected to a body portion 238 of the vehicle 101. The body portion 238 is configured to provide support for various vehicle components coupled to the body portion 238. The body portion 238 may be formed from metals (e.g., steel, aluminum, etc.), plastics (e.g., polycarbonate, polypropylene, etc.), or a combination thereof.

The trim assembly 100 also includes the skin 240 that is configured to couple to and extend over an outer surface of the shell 126. The skin 240 provides a decorative covering for the shell 126 to provide a visually and tactilely pleasing interior of the vehicle 101 for the occupants. For example, the skin 240 may include a color and/or pattern to match or complement one or more colors and/or patterns of other components in the cabin of the vehicle 101 (e.g., seat covering, console color, etc.). The skin 240 may also include a texture to match or complement one or more textures of the other components in the cabin of the vehicle 101.

The skin 240 may include a textile material (e.g., including natural textile materials, synthetic textile materials, woven textile materials, and non-woven textile materials) that is configured to flex and stretch to facilitate coupling to the shell 126. For example, and as shown in FIG. 2B, the skin 240 may be sized smaller than the shell 126 in an unstretched configuration such that the skin 240 stretches (e.g., to a stretched configuration as shown with dotted lines) to properly couple to and cover the shell 126 in the stretched configuration. Such stretching may smooth the skin 240 by limiting portions of the skin 240 that exhibit folded portions, bunched portions, etc. The skin 240 being smooth provides the impression that the interior portion of the vehicle 101 is a continuous surface.

The skin 240 may be coupled to the shell 126 in a variety of ways. In some implementations, the skin 240 may be coupled to the shell 126 mechanically. For example, the skin 240 may include loops on a back surface of the skin 240 that faces the shell 126, and the shell 126 may include corresponding hooks configured to receive the loops. As another example, the skin 240 may include one or more magnets configured to couple with a corresponding magnet on the shell 126. In some implementations, the mechanical connectors are arranged such that the skin 240 can only be connected to the shell 126 in a single orientation. In some implementations, an inner surface of the skin 240 may include hooks configured to couple with a mesh on an outer surface of the shell 126 to couple the skin 240 to the shell 126.

In some implementations, the skin 240 may be coupled to the shell 126 using heat and compression. For example, the skin 240 and the shell 126 may be placed together in a mold and then heated and compressed. The skin 240 and the shell 126 may fuse together and based on the combination of heat and compression and may form a unitary panel (e.g., one or more of the skin 240 and the shell 126 may partially melt such that the material of the skin 240 and the material of the shell 126 combine at an interface between the skin 240 and the shell 126). In some implementations, a material may be placed between the shell 126 and the skin 240 to facilitate bonding. For example, the material may include a glue or a melting layer (e.g., a layer of material configured to melt at a specified temperature to bond the shell 126 and the skin 240). In some implementations, the melting layer may include a foil, a film, a foam, etc. Upon reaching the specified temperature, the shell 126 and the skin 240 may bond with the melted material to generate the unitary panel.

In some implementations, the skin 240 may be omitted. For example, the shell 126 may include an outer surface (e.g., a surface that faces the cabin of the vehicle 101) that includes one or more characteristics similar to those of the skin 240. More specifically, the shell 126 may include one or more colors and/or textures that may provide a visually and tactilely pleasing interior of the vehicle 101 for the occupants of the vehicle 101 such that the skin 240 is not implemented.

FIG. 3 is an illustration of a cross-section of a portion of the trim assembly 100 of FIG. 2 taken across line B-B. As shown, the connector portion 128 includes a mating portion 342 that is configured to interface with a corresponding mating portion 344 of the second trim panel 106. Though not shown in FIG. 2, the mating portion 342 is also configured to interface with a corresponding mating feature of the first trim panel 104 to align the first trim panel 104 and the second trim panel 106 to limit mismatch between the first trim panel 104 and the second trim panel 106. The mating portion 342 is shown as a boss or protrusion and the corresponding mating portion 344 is shown as a recess or cutout, but the mating portion 342 and the corresponding mating portion 344 can be implemented in various ways to align the first trim panel 104 and the second trim panel 106. Additionally, the connector portion 128 is shown as having a length L₁ that is shorter than a length L₂ of the second trim panel 106. In some implementations, L₁ and L₂ are equal such that the connector portion 128 extends across the entire length of the second trim panel 106.

FIG. 4 is an illustration of the shell 126 of FIG. 1, according to an example implementation. The shell 126 includes a first shell portion 446, a second shell portion 448, and a third shell portion 450. In some implementations, the shell portions 446-450 may be a unitary panel (e.g., formed from one piece of material). The shell portions 446-450 may also be formed from separate pieces of material that are joined together to provide a seamless transition between each of the shell portions 446-450. As described above, the shell 126 may be formed using heat and compression to impart desired characteristics to the shell 126. In an example implementation, the second shell portion 448 has a stiffness that is lower than a stiffness of the first shell portion 446 and the third shell portion 450 (e.g. the second shell portion 448 may be compressed at a lower pressure than the first shell portion 446 and the third shell portion 450 when manufactured). Accordingly, the second shell portion 448 may be more flexible than the first shell portion 446 and the third shell portion 450. The difference in flexibility may allow the shell 126 to be coupled to and/or removed from the trim portion 102 more easily than if the shell portions 446-450 had the same stiffness. For example, the shell 126 may be manipulated to bend the second shell portion 448 to bring the third shell portion 450 and the first shell portion 446 toward each other, thereby allowing for more maneuverability when positioning the shell 126 for assembly onto the trim portion 102. More specifically, the shell 126 may be assembled to the trim portion 102 after various structural and non-structural components (e.g., pillars, ceiling panel, etc.) are rigidly coupled together. Accordingly, the shell 126 is configured to resiliently deform (e.g., based on portions of the shell 126 having different stiffnesses) such that the shell 126 can be maneuvered into the cabin of the vehicle 101 (e.g., through a vehicle opening such as a door or window, around one or more pillars, etc.). After the shell 126 is in the cabin of the vehicle 101, the shell 126 is permitted return to its original shape such that the shell 126 can be coupled to the trim portion 102 in one step. More specifically, the shell 126 may be large enough to cover a trim portion that includes portions of the roof and at least some of the pillars of the vehicle 101. Thus, the shell 126 is configured to be applied to the portions of the roof and the pillars in one step. For example, after the shell 126 is maneuvered into the cabin of the vehicle 101, the shell 126 may be oriented such that mating features of the shell 126 and the trim portion 102 are aligned. Moving shell 126 toward the trim portion 102 may allow the mating features to interface with each other, thereby coupling the shell 126 and the trim portion 102. In some implementations, the shell 126 may be large enough to cover a trim portion that includes the entire roof and all of the pillars of the vehicle 101 in one step.

As shown in FIG. 4, the first shell portion 446 has a width W₁, the second shell portion 448 has a width W₂, and the third shell portion 450 has a width W₃. The widths W₁, W₂, and W₃ are shown as being approximately equal, however the relative values of widths W₁, W₂, and W₃ may change based on the implementation. For example, the width W₂ may be comparatively smaller than the widths W₁ and W₃ in implementations where the second shell portion 448 is flexible relative to the first shell portion 446 and the second shell portion 450. More specifically, the width W₁ and/or the width W₃ may be up to 10 times larger than the width W₂. Such implementations may facilitate installing the shell 126 around a corner or bend (e.g., the relatively flexible and relatively smaller second shell portion 448 may extend around the corner when installing the shell 126 in the vehicle 101.

In some implementations, the stiffness of a single portion can vary across the portion. For example, the first shell portion 446 may include various areas with different stiffnesses (e.g., a portion with a low stiffness, a portion with a high stiffness, a portion with a medium stiffness, etc.) that are generated as described above. Varying the stiffness of a single portion may allow each portion to be manipulated (e.g., bent, folded, etc.) separately to maneuver the shell 126 into the cabin of the vehicle 101.

With the shell portions 446-450 having different stiffnesses, the shell 126 may be configured to be removably coupled to the trim portion 102. For example, a portion of the vehicle 101 positioned behind the shell 126 may be in need of repair or replacement. Instead of having to replace the shell 126 after performing the repair or replacing the panel (e.g., because the shell 126 may be damaged to in reaching the desired portion of the vehicle 101), the shell 126 can be removed from the trim portion 102 in the reverse manner in which it was installed, and then replaced when the repair is complete.

In addition, providing a shell 126 that can be removed and replaced easily provides options for having different visual characteristics in the cabin of the vehicle 101. For example, the vehicle 101 may be provided with multiple shells 126, with each shell 126 provided with a different skin. More specifically, the vehicle 101 may be provided with the shell 126 coupled with the skin 240, another shell 126 coupled with a different skin with a different visual characteristic (e.g., color, pattern, texture, etc.), and yet another shell 126 coupled with yet a different visual characteristic. Each of the shells 126 can be coupled to and removed from the trim portion 102 as desired. Such an arrangement provides for greater personalization of the cabin of the vehicle 101.

As shown, the shell 126 may also cover an aperture 452 defined by and extending through the trim portion 102. In some implementations, the aperture 452 may also extend through the structural and non-structural components to which the trim portion 102 is assembled. Though shown as a circle, the aperture 452 may include any shape. The aperture 452 may be sized to allow access to portions of the vehicle 101 located behind the trim portion 102 for repair and/or replacement. For example, the shell 126 may be removed from the trim portion 102, revealing one or more apertures 452 that provide access to portions of the vehicle 101 that include a vehicle component (e.g., a panel, a structural component, an electrical component, etc.) that may require repair or replacement. After performing the repair and/or replacement of the panels, the shell 126 may be coupled to the trim portion 102, thereby obscuring the aperture 452 from view from within the cabin of the vehicle 101.

The aperture 452 is sized such that the shell 126 provides a smooth transition across the aperture 452. For example, the shell 126 limits the presence of bumps, recesses, slopes, or other surface disruptions that may indicate the location of the aperture 452 such that the location of the aperture 452 is imperceptible to an occupant of the vehicle 101.

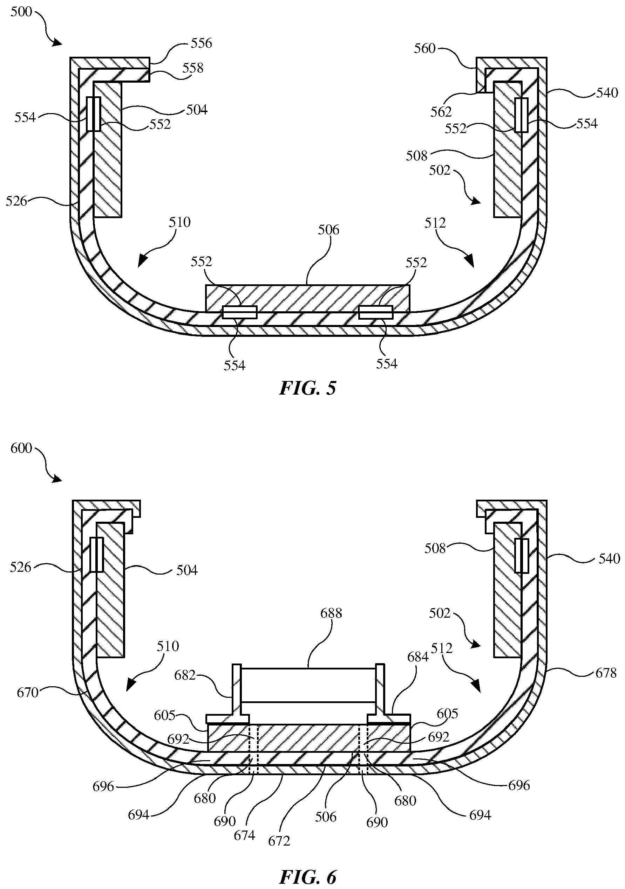

FIG. 5 is an illustration of a trim assembly 500 that includes a trim portion 502 with a first trim panel 504, a second trim panel 506, and a third trim panel 508. The trim panels 504-508 are similar to the trim panels 104-108 aside from any differences noted herein with respect to FIG. 5. The first trim panel 504 and the second trim panel 506 are separated by a gap 510, and the second trim panel 506 and the third trim panel 508 are separated by a gap 512. The trim assembly 500 also includes a shell 526 and a skin 540, which are similar to the shell 126 and the skin 240 aside from any differences noted herein with respect to FIG. 5.

In some implementations, the shell 526 and the skin 540 may be configured to absorb a portion of sounds (e.g., sounds generated by the vehicle 101 and/or sounds from outside the vehicle 101) that would typically pass through the gaps 510-512 and into the cabin of the vehicle 101. For example, a sound from one or more of a motor of the vehicle 101, road noise, tire noise, etc., may reach the gaps 510-512, and the shell 526 and the skin 540 may absorb some or all of the sounds prior to the sounds entering the cabin of the vehicle 101. The shell 526 and the skin 540 may also be configured to absorb a portion of sounds generated from within the cabin of the vehicle 101. For example, the skin 540 may include noise absorbing surfaces that may limit propagation of sound waves within the cabin of the vehicle 101.

As shown, the trim panels 504-508 include a coupling portion 552. The coupling portion 552 may be configured to interface with a corresponding coupling portion 554 located on the shell 526. For example, the coupling portion 552 may include a mechanical fastener such a snap, a hook, a hook-and-loop connector, a magnet, a push through connector, a hook interlock connector, a double hook interlock connector, or a combination thereof. The corresponding coupling portion 554 includes the corresponding panel for the coupling portion 552 such that the coupling portion 552 can connect with the corresponding coupling portion 554. The coupling portion 552 and the corresponding coupling portion 554 are configured to position the shell 526 in an orientation relative to the trim portion 502 such that the shell 526 can be assembled properly to the trim portion 502. In some implementations, various coupling portions 552 are arranged on the trim panels 504-508 in an asymmetric fashion such that the shell 526 can only be coupled with the trim portion 502 in a single orientation (e.g., the desired orientation). Thus, each corresponding coupling portion 554 interfaces with a respective coupling portion 552 to couple the shell 526 to the trim portion 502 and orient the shell 526 relative to the trim portion 502.

The shell 526 is shown to include a flange portion 562 that extends at least partially around the third trim panel 508 such that the flange portion 562 contacts an inner surface of the third trim panel 508 to couple the shell 526 to the third trim panel 508. Though described relative to the third trim panel 508, the shell 526 may also include a flange portion 562 that contacts the first trim panel 504 in the same manner in which the flange portion 562 contacts the third trim panel 508. The flange portion 562 is configured to secure the shell 526 to the trim portion 502 to limit motion of the shell 526 relative to the trim portion 502. As shown, the skin 540 also includes a flange portion 560 that covers the flange portion 562.

The shell 526 is also shown to include an extension portion 558 that extends partially around the first trim panel 504 such that the extension portion 558 extends beyond an inner surface of the first trim panel 504 to partially obscure a view of the cabin of the vehicle 101 from outside the vehicle 101. Though described relative to the first trim panel 504, the shell 526 may also include an extension portion 558 that extends partially around the third trim panel 508 in the same manner in which the extension portion 558 extends partially around the first trim panel 504. As shown, the skin 540 also includes an extension portion 556 that covers the extension portion 558. In some implementations, the extension portion 556 is omitted and the skin 540 does not cover the extension portion 558.

In some implementations, the locations of the first trim panel 504 and the third trim panel 508 may be adjustable. For example, the locations of the first trim panel 504 and the third trim panel 508 may be adjusted toward or away from a glazed surface of the vehicle 101 (e.g., a window, windshield, etc.) such that the shell 526 is approximately aligned with a frit portion of the glazing. Such approximate alignment of the shell 526 with the frit portion may provide the perception that an interface between the interior portions of the cabin and the glazed surface is seamless.

FIG. 6 is an illustration of a trim assembly 600 that includes the shell 526 and the skin 540. The shell 526 also has a weakened portion 680 that separates a first shell portion 670 from a second shell portion 672. The weakened portion 680 is configured to allow the shell 526 to deform in response to a force (e.g., to adopt the shape of the underlying structure). In some implementations, the weakened portion 680 includes a perforation that extends through the shell 526. The weakened portion 680 may also include a reduced thickness of the shell 526 configured to reduce a strength of the weakened portion 680. Furthermore, the weakened portion 680 may include a hinge that allows the second shell portion 672 to move relative to the first shell portion 670 while remaining coupled to the first shell portion 670.

The skin 540 may have a weakened portion 690 that separates a first skin portion 678 from a second skin portion 674 and is configured to allow the skin 540 to deform in response to a force (e.g., to adopt the shape of the underlying structure). Similar to the weakened portion 680, the weakened portion 690 may include a perforation that extends through the skin 540. The weakened portion 690 may also include a reduced thickness of the skin 540 to reduce a strength of the weakened portion 690. Furthermore, the weakened portion 690 may include a hinge that allows the second skin portion 674 to move relative to the first skin portion 678 while remaining coupled to the first skin portion 678. As shown, the weakened portion 690 is aligned with the weakened portion 680.

In some implementations, the weakened portion 680 and the weakened portion 690 allow the shell 526 and the skin 540 to bend and/or flex to compensate for the adjustability of the first trim panel 504 and the third trim panel 508. For example, as the first trim panel 504 and the third trim panel 508 move toward or away from each other, the weakened portion 680 and the weakened portion 690 may allow the shell 526 and the skin 540 to change shape to adjust to the different locations of the first trim panel 504 and the third trim panel 508.

The trim assembly 600 also includes the trim portion 502 with the trim panels 504-508. The second trim panel 506 is shown to include a weakened portion 692 that is similar to the weakened portion 680 and the weakened portion 690.

The second trim panel 506 is coupled to a first support bar 682 and a second support bar 684. The first support bar 682 and the second support bar 684 support an expandable portion 688 that is configured to expand from an unexpanded configuration to an expanded configuration in response to a force. For example, the expandable portion 688 may include an expandable bladder configured to expand with an inflation material (e.g., air, gas, liquid, etc.) when a force is imparted to the vehicle 101. More specifically, when a force is imparted to the vehicle 101, the expandable portion 688 expands and contacts the second trim panel 506. The second trim panel 506 separates at the weakened portion 690 and contacts the second shell portion 672, thereby transferring the force of the expandable portion 688 to the second shell portion 672. The second shell portion 672 and the second skin portion 674 separate from the first shell portion 670 and the first skin portion 678, respectively, to allow the expandable portion 688 to enter the cabin of the vehicle 101. Accordingly, the first shell portion 670 and the second shell portion 672 separate when the expandable portion 688 moves from the unexpanded configuration to the expanded configuration and applies a force to the second shell portion 672.

In some implementations, the skin 540 includes a reinforced portion 694 that is adjacent to the weakened portion 690. The reinforced portion 694 is configured to maintain its position relative to the first skin portion 678 when the second skin portion 674 separates from the first skin portion 678. For example, the reinforced portion 694 may be thicker than the first skin portion 678. Additionally, the shell 526 may include a reinforced portion 696 that is adjacent to the weakened portion 680. The reinforced portion 696 is configured to maintain its position relative to the first shell portion 670 when the second shell portion 672 separates from the first shell portion 670.

Implementations described herein are directed to a vehicle trim assembly. The vehicle trim assembly includes a trim portion having a first trim panel and a second trim panel that are separated by a gap. A shell is configured to couple with the trim portion. An outer surface of the shell is continuous from an outer edge of the first trim panel to an outer edge of the second trim panel. The outer surface extends across the gap.

In some implementations, the shell is configured to couple with the trim portion with a mechanical fastener. The mechanical fastener may include a snap, a hook, a hook-and-look connector, a magnet, a push through connector, or a combination thereof.

In some implementations, the shell includes a flange portion that extends at least partially around the first trim panel such that the flange portion contacts an inner surface of the first trim panel to couple the shell to the first trim panel.

In some implementations, the shell includes an extension portion that extends partially around the first trim panel such that the extension portion extends beyond an inner surface of the first trim panel to partially obscure a view of a cabin of a vehicle from outside of the vehicle.

In some implementations, the vehicle trim assembly includes a skin coupled to and extending over the outer surface of the shell. The shell and the skin may form a unitary panel.
In some implementations, the first trim panel and the second trim panel are connected by a connector portion that includes a mating portion configured to interface with a corresponding mating portion of the first trim panel and the second trim panel, wherein the connector portion extends across the gap.

Implementations described herein are also directed to a vehicle trim assembly having a trim portion that includes a first trim panel and a second trim panel. A shell is configured to couple with the trim portion. A connector portion is configured to connect to the first trim panel and the second trim panel, and the connector includes a mating portion configured to interface with a corresponding mating portion of the first trim panel and the second trim panel to align the first trim panel and the second trim panel. The shell is configured to extend across gaps between the first trim panel, the second trim panel, and the connector portion such that the gaps are obscured from view from within a cabin of a vehicle.

In some implementations, the connector portion is flexible to allow the first trim panel to move relative to the second trim panel.

In some implementations, the vehicle trim assembly includes a skin configured to extend over an outer surface of the shell. The outer surface of the shell may include a mesh, and an inner surface of the skin may include hooks configured to couple with the mesh.

In some implementations, the connector portion has a coefficient of thermal expansion that is lower than a coefficient of thermal expansion of the first trim panel and the second trim panel.

In some implementations, the trim portion defines an aperture sized to allow access to a vehicle component through the aperture.

In some implementations, the first trim panel includes a first portion, a second portion, and a third portion, wherein the second portion is located between the first portion and the third portion, and a stiffness of the second portion is lower than a stiffness of the first portion and the third portion.

Implementations described herein are also directed to a vehicle that includes a body portion. The vehicle also includes a trim portion connected to the body portion, and the trim portion includes a first trim panel and a second trim panel that are separated by a gap. A shell is configured to couple with the trim portion, and an outer surface of the shell is continuous from an outer edge of the first trim panel to an outer edge of the second trim panel and extends across the gap such that the gap is obscured from view from within a cabin of the vehicle. A skin is configured to extend over the outer surface of the shell. The shell has a weakened portion that separates a first shell portion from a second shell portion and is configured to allow the shell to deform in response to a force.

In some implementations, the first shell portion and the second shell portion separate when an expandable portion of the vehicle moves from an unexpanded configuration to an expanded configuration and applies the force to the second shell portion.

In some implementations, wherein the weakened portion includes a perforation that extends through the shell.

In some implementations, the weakened portion includes a reduced thickness of the shell that is configured to reduce a strength of the weakened portion.

In some implementations, the skin has a weakened portion configured to allow the skin to deform in response to the force. The skin may also have a reinforced portion that is adjacent to the weakened portion of the skin.

As described above, one aspect of the present technology is the gathering and use of data available from various sources for use during operation of a vehicle that includes the trim assembly 100. As an example, such data may identify the user and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, a user profile may be established that stores user preference related information that allows adjustment of operation of the vehicle according to the user preference information. Accordingly, use of such personal information data enhances the user's experience.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of storing a user profile for operating the vehicle, the present technology can be configured to allow users to select to "opt in" or "opt out" of participation in the collection of personal information data during registration for services or anytime thereafter. In another example, users can select not to provide data regarding usage of specific applications. In yet another example, users can select to limit the length of time that application usage data is maintained or entirely prohibit the development of an application usage profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, user preference information may be determined each time the vehicle is used, such as by the user entering the user preference information in real time, and without subsequently storing the information or associating with the particular user.

## Claims

1. A vehicle trim assembly, comprising:
a trim portion that includes a first trim panel and a second trim panel that are separated by a gap; and
a shell configured to couple with the trim portion, wherein an outer surface of the shell is continuous from an outer edge of the first trim panel to an outer edge of the second trim panel and extends across the gap.

2. The vehicle trim assembly of claim 1, wherein the shell is configured to couple with the trim portion with a mechanical fastener that includes a snap, a hook, a hook-and-loop connector, a magnet, a push through connector, or a combination thereof.

3. The vehicle trim assembly of claim 1, wherein the shell includes a flange portion that extends at least partially around the first trim panel such that the flange portion contacts an inner surface of the first trim panel to couple the shell to the first trim panel.

4. The vehicle trim assembly of claim 1, wherein the shell includes an extension portion that extends partially around the first trim panel such that the extension portion extends beyond an inner surface of the first trim panel to partially obscure a view of a cabin of a vehicle from outside of the vehicle.

5. The vehicle trim assembly of claim 1, further comprising a skin coupled to and extending over the outer surface of the shell.

6. The vehicle trim assembly of claim 5, wherein the shell and the skin form a unitary panel.

7. The vehicle trim assembly of claim 1, further comprising a connector portion configured to connect to the first trim panel and the second trim panel, wherein the connector portion includes a mating portion configured to interface with a corresponding mating portion of the first trim panel and the second trim panel to align the first trim panel and the second trim panel,
wherein the shell is configured to extend across the gap between the first trim panel, the second trim panel, and the connector portion such that the gap is obscured from view from within a cabin of a vehicle.

8. The vehicle trim assembly of claim 7, wherein the connector portion is flexible to allow the first trim panel to move relative to the second trim panel.

9. The vehicle trim assembly of claim 7, further comprising a skin configured to extend over the outer surface of the shell.

10. The vehicle trim assembly of claim 9, wherein the outer surface of the shell includes a mesh, and an inner surface of the skin includes hooks configured to couple with the mesh.

11. The vehicle trim assembly of claim 9, wherein the skin has a weakened portion configured to allow the skin to deform in response to a force.

12. The vehicle trim assembly of claim 7, wherein the connector portion has a coefficient of thermal expansion that is lower than a coefficient of thermal expansion of the first trim panel and the second trim panel.

13. The vehicle trim assembly of claim 7, wherein the trim portion defines an aperture sized to allow access to a vehicle component through the aperture.

14. The vehicle trim assembly of claim 7, wherein the first trim panel includes a first portion, a second portion, and a third portion, wherein the second portion is located between the first portion and the third portion, and a stiffness of the second portion is lower than a stiffness of the first portion and the third portion.

15. The vehicle trim assembly of claim 7, wherein the shell has a weakened portion that separates a first shell portion from a second shell portion and is configured to allow the shell to deform in response to a force.
